# FASCICULE DE BREVET EUROPEEN

(11) **EP 2 445 733 B1**
(45) Date de publication et mention de la délivrance du brevet: **24.10.2012**
(21) Numéro de dépôt: 10745315.1
(22) Date de dépôt: 24.06.2010
(51) Int. Cl.: B60C 29/02

(54) **VALVE ASYMETRIQUE POUR ROUE DE VEHICULE**
ASYMMETRISCHES VENTIL FÜR EIN FAHRZEUGRAD
ASYMMETRIC VALVE FOR VEHICLE WHEEL

(30) Priorité: 25.06.2009 FR 0954328
(43) Date de publication de la demande: 02.05.2012
(73) Titulaire: Schrader S.A.S., 25300 Pontarlier (FR)
(72) Inventeur: ROBERT, Aurélien, F-26240 Saint Barthelemy de Vals (FR)
(74) Mandataire: Brungard, Yves Francois
(86) Numéro de dépôt international: PCT/FR2010/051292
(87) Numéro de publication internationale: WO 2010/149933

(56) Documents cités:
- FR-A- 2 903 752
- US-A- 2 928 448
- US-A- 3 368 603

## Description

La présente invention concerne une valve destinée à être montée directement sur la jante d'une roue de véhicule équipée d'un pneu sans chambre, dit « tubeless ».

Une telle valve est rendue solidaire de la jante qu'elle traverse et il est connu de la réaliser à partir d'une douille métallique filetée traversant la jante, et immobilisée par un écrou, par l'intermédiaire d'un joint.

Ceci présente l'inconvénient d'être d'un coût élevé du fait de l'effet multi-composants, à savoir un écrou, un joint et une valve. Ceci engendre nécessairement également des manipulations multiples au montage ou au démontage.

Des valves connues sont divulguées dans les documents US-A-3368603, US-A-2928448 et FR-A-2903 752.

Sont également connues des valves de type « Snap-In », rendues solidaires de la jante qu'elles traversent par l'intermédiaire d'une gorge réalisée à la base d'un bulbe se prolongeant par un enrobage caoutchouc d'une tubulure interne de la valve, ladite gorge coopérant élastiquement avec un trou de la jante sur le pourtour de laquelle elle se loge en force, grâce à la déformation élastique de la gorge.

Ainsi la valve peut être montée en une seule opération, et sans avoir recours à des éléments intermédiaires comme l'écrou et le joint.

Néanmoins, les essais ont permis de constater une certaine instabilité de la valve, d'autant plus lorsque la partie interne de la valve est associée à un boitier capteur de pression, ce qui augmente la masse du dispositif, et plus particulièrement à haute vitesse.

Dans ce cas, la force centrifuge déstabilise l'ensemble du fait de la tendance à faire monter le boitier en direction de la périphérie de la roue, et conséquemment, à exercer une contrainte supplémentaire sur le caoutchouc de la valve, au niveau du trou de la jante. Il a pu être constaté qu'il s'ensuivait des effets de cisaillement et des amorces de rupture de l'élastomère constituant la valve, ayant pour conséquence de provoquer des fuites nuisant à l'étanchéité de la roue.

Les essais ont démontré que ces effets néfastes du fait de la force centrifuge ont lieu dans la partie supérieure du bulbe et de la gorge de la valve, au niveau du trou de jante.

On aurait pu penser remédier à ce problème en augmentant l'épaisseur de l'élastomère au niveau du bulbe et de la gorge, ou sa dureté sur toute la périphérie de la gorge coopérant avec le pourtour du trou de jante. Mais ceci impliquerait un effort d'introduction supplémentaire lors du montage de la valve dans le trou de jante.

Selon une première phase de la démarche inventive, il a été déterminé qu'il fallait traiter de manière différente la zone externe de la valve au niveau du trou de jante, de sa partie interne.

Il a donc été recherché un compromis au niveau du bulbe et de la gorge du fait des efforts dissymétriques avec le pourtour du trou de jante.

Il a également pu être constaté que, lorsque le trou de jante était trop proche du fond de jante, le bulbe, dans sa partie interne, avait tendance à subir des contraintes supérieures que dans sa partie externe.

Pour y remédier, il a été imaginé de réduire également le volume du bulbe dans cette zone interne dirigée vers le fond de jante.

Autrement dit, l'allègement de cette deuxième partie du bulbe contribue également à réduire, de manière globale, la zone interne, au bénéfice de la zone externe.

A partir de ces réflexions, et afin de résoudre les problèmes précités, la présente invention concerne une valve de type « Snap-In » telle que définie dans la revendication 1. Ladite valve est destinée à être montée directement sur la jante d'une roue de véhicule équipée d'un pneu sans chambre, dit « tubeless », ladite valve étant rendue solidaire de la jante qu'elle traverse par l'intermédiaire d'une gorge, réalisée à la base d'un bulbe se prolongeant par un enrobage caoutchouc d'une tubulure interne de la valve, ladite gorge coopérant élastiquement avec un trou de la jante, sur le pourtour duquel elle se loge, caractérisée en ce que la masse volumétrique du bulbe est inférieure dans sa zone dirigée vers l'intérieur de la jante, par rapport à sa zone dirigée vers l'extérieur, cette réduction s'effectuant à proximité de la gorge, destinée à coopérer avec le trou de jante, tant dans sa partie entourant la tubulure que dans sa partie en contact avec le fond de jante.

Il a été ainsi créé une valve asymétrique, de masse différente dans sa partie externe dirigée vers l'extérieur de la jante par rapport à sa partie interne dirigée vers l'intérieur de la jante, résolvant le double problème posé.

L'invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels:
La figure 1 représente une vue en coupe longitudinale d'une valve selon l'invention, associée, à titre d'exemple de réalisation, à un capteur de pression logé dans un boitier situé à l'intérieur de la jante, avant montage.
La figure 2 représente un dispositif selon la figure 1, après montage sur la jante.

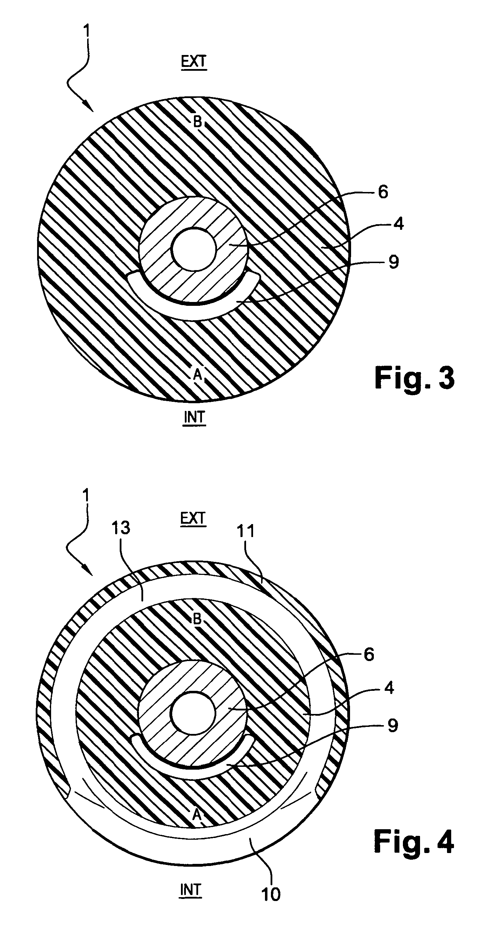

La figure 3 est une vue en coupe transversale, à échelle agrandie, selon la ligne III-III de la figure 1.
La figure 4 est une vue en coupe transversale, à échelle agrandie, selon la ligne IV-IV de la figure 1.

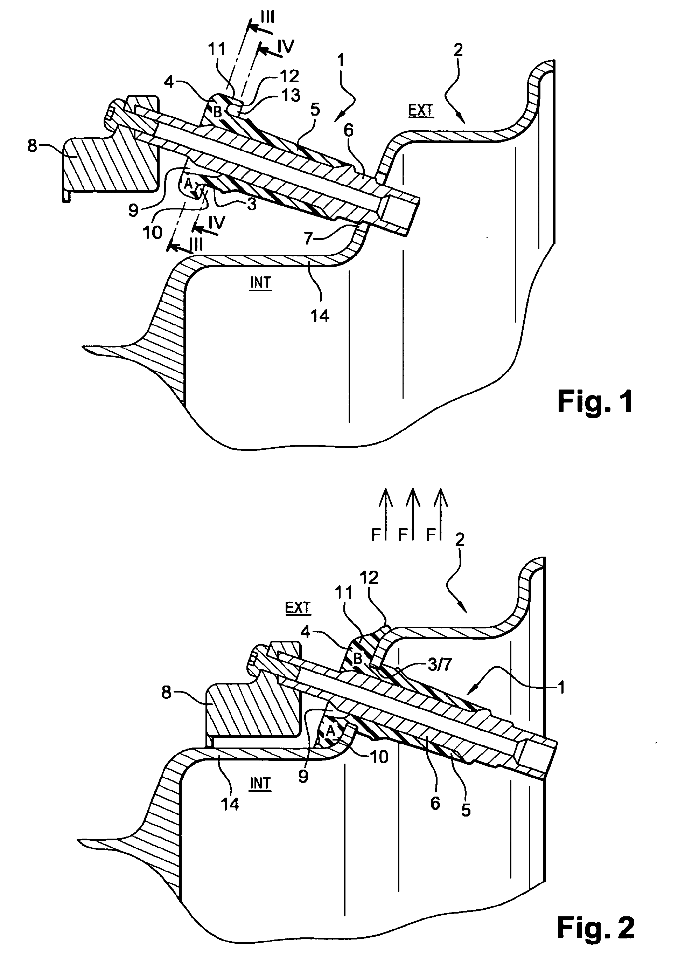

La valve 1 globalement désignée sur les figures 1 et 2 est du type « Snap-In », destinée à être montée directement sur la jante 2 d'une roue de véhicule équipée d'un pneu sans chambre, dit « tubeless ».

La valve 1 est rendue solidaire de la jante 2 qu'elle traverse par l'intermédiaire d'une gorge 3 réalisée à la base d'un bulbe 4 se prolongeant par un enrobage caoutchouc 5 d'une tubulure interne 6 de la valve 1. Ladite gorge 3 coopère élastiquement avec un trou 7 de la jante 2, sur le pourtour duquel elle se loge.

Selon le présent exemple de réalisation, non limitatif, la valve 1 est associée à un capteur de pression logé dans un boitier 8 situé à l'intérieur du pneu.

Selon l'invention, la masse volumétrique du bulbe 4 est inférieure dans sa zone « A » dirigée vers l'intérieur « INT » de la jante 2, par rapport à sa zone « B » dirigée vers l'extérieur « EXT », cette réduction s'effectuant à proximité de la gorge 3, destinée à coopérer avec le trou 7 de jante 2, tant dans sa partie entourant la tubulure 6 que dans sa partie en contact avec le fond 14 de jante 1.

Comme bien visible sur les figures, la partie du bulbe 4 entourant la tubulure 6 présente, dans sa zone inférieure « A » dirigée vers l'intérieur « INT » de la jante 2, un évidement coaxial borgne 9, s'étendant selon un secteur circulaire, de manière à diminuer sa masse dans cette zone, tout en l'augmentant dans sa zone « B » dirigée vers l'extérieur « EXT », diamétralement opposée.

Par ailleurs, selon une autre caractéristique de l'invention, la partie périphérique interne du bulbe 4 est constituée par une collerette 11 définissant une lèvre 12 correspondante, délimitant une gorge annulaire partielle 13, présentant, dans sa zone inférieure « A » dirigée vers l'intérieur « INT » de la jante 2, destinée à venir en contact avec le fond 14 de jante 2, une réduction 10 de la lèvre 12, dans le sens de sa hauteur, de manière à réduire sa masse et à faciliter son application sur ledit fond 14 de jante 2, lorsque le trou 7 de montage de la valve 1 dans celle-ci est trop proche, et n'offrant pas à la lèvre 12 un appui plan sur toute sa portée.

Selon une variante de réalisation, la partie périphérique interne du bulbe 4 présente, dans sa zone inférieure « A » dirigée vers l'intérieur « INT » de la jante 2, destinée à venir en contact avec le fond 14 de jante 2, une réduction 10 localisée de sa circonférence, de manière à réduire sa masse et à faciliter son application sur ledit fond 14 de jante 2, lorsque le trou 7 de montage de la valve 1 dans celle-ci est trop proche, et n'offrant pas au bulbe 4 un appui plan sur toute sa portée.

Selon une autre caractéristique, la valve 1 comporte des moyens d'indexation par rapport à la jante, de manière à l'orienter en fonction de l'évidement 9 et de la réduction 10.

Plus précisément, la valve 1 est associée à un capteur de pression logé dans un boitier, la liaison entre la valve et le boitier s'effectuant par l'intermédiaire des moyens d'indexation constitués par au moins un méplat réalisé sur la tubulure de la valve, en correspondance d'un méplat complémentaire réalisé dans un logement du boitier, ce dernier étant positionné par rapport à la jante, lors du montage.

## Revendications

1. Valve (1) de type « Snap-In » destinée à être montée directement sur une jante (2) d'une roue de véhicule équipée d'un pneu sans chambre, dit « tubeless », ladite valve (1) étant rendue solidaire d'un trou (7) de la jante (2), qu'elle traverse axialement, par l'intermédiaire d'une gorge (3), réalisée à la base d'un bulbe (4) de la valve, ledit bulbe (4) se prolongeant par un enrobage caoutchouc (5) d'une tubulure interne (6) de la valve (1), ladite gorge (3) coopérant élastiquement avec le trou (7) de la jante (2), sur le pourtour duquel elle se loge, **caractérisée en ce que**, selon l'axe longitudinal de la valve (1), la masse ou le volume du bulbe (4) est réduite dans la zone (A) du bulbe située sous ledit axe, dirigée vers la jante (2), par rapport à la zone (B) du bulbe située au-dessus de ce même axe, cette réduction (9,10) s'effectuant à proximité de la gorge (3), destinée à coopérer avec le trou (7) de jante (2), ladite valve comportant des moyens d'indexation de manière à orienter sa réduction (9,10) vers le fond (14) de la jante (2).

2. Valve selon la revendication 1, **caractérisée en ce que** la partie du bulbe (4) entourant la tubulure (6) présente, dans sa zone (A) située sous son axe longitudinal, un évidement coaxial borgne (9), constituant une réduction, s'étendant selon un secteur circulaire, de manière à diminuer sa masse ou son volume dans cette zone, tout en l'augmentant dans sa zone (B), diamétralement opposée.

3. Valve selon la revendication 1, **caractérisée en ce que** la partie périphérique interne du bulbe (4) est constituée par une collerette (11) définissant une lèvre (12) correspondante, délimitant une gorge annulaire partielle (13), présentant, dans sa zone (A) située sous l'axe longitudinal de la valve (1) et destinée à venir en contact avec le fond (14) de jante (2), une réduction (10) de la lèvre (12), dans le sens de sa hauteur selon l'axe longitudinal de la valve, de manière à réduire sa masse ou son volume et à faciliter son application sur ledit fond (14) de jante (2), lorsque le trou (7) de montage de la valve (1) dans celle-ci est trop proche, et n'offrant pas au bulbe (4) un appui plan sur toute sa portée.

4. Valve selon la revendication 1, **caractérisée en ce que** la partie périphérique interne du bulbe (4) présente, dans sa zone (A) située sous l'axe longitudinal de la valve, destinée à venir en contact avec le fond (14) de jante (2), une réduction (10) localisée de sa circonférence, de manière à réduire sa masse ou son volume et à faciliter son application sur ledit fond (14) de jante (2), lorsque le trou (7) de montage de la valve (1) dans celle-ci est trop proche, et n'offrant pas au bulbe (4) un appui plan sur toute sa portée.

5. Valve selon l'une des revendications 1 à 4, **caractérisée en ce qu'**elle est associée à un capteur de pression logé dans un boitier, la liaison entre la valve et le boitier s'effectuant par l'intermédiaire des moyens d'indexation constitués par au moins un méplat réalisé sur la tubulure de la valve, en correspondance d'un méplat complémentaire réalisé dans un logement du boitier, ce dernier étant positionné par rapport à la jante, lors du montage.

## Claims

1. Valve (1) of the "Snap-In" type intended to be mounted directly on a rim (2) of a vehicle wheel fitted with a "tubeless" tire, said valve (1) being secured to a hole (7) in the rim (2), through which it passes axially, by the intermediary of a groove (3), produced at the base of a bulb (4) of the valve, said bulb (4) extended by a rubbery coating (5) of an internal nozzle (6) of the valve (1), said groove (3) cooperating elastically with the hole (7) in the rim (2), on the periphery of which it becomes housed, **characterized in that**, according to the longitudinal axis of the valve (1), the mass or the volume of the bulb (4) is reduced in the region (A) of the bulb located under said axis, directed toward the rim (2), by comparison with the region (B) of the bulb located above this same axis, this reduction (9, 10) taking place in the vicinity of the groove (3), intended to cooperate with the hole (7) in the rim (2), said valve comprising means of indexing in such a way as to direct its reduction (9, 10) toward the bottom (14) of the rim (2).

2. Valve according to claim 1, **characterized in that** the portion of the bulb (4) that surrounds the nozzle (6) has, in its region (A) located under its longitudinal axis, a blind coaxial recess (9), constituting a reduction, extending according to a circular sector, in such a way as to reduce its mass or its volume in this region, while still increasing it in its region (B), diametrically opposite.

3. Valve according to claim 1, **characterized in that** the internal peripheral portion of the bulb (4) is comprised of a flange ring (11) defining a corresponding lip (12), delimiting a partial annular groove (13), having, in its region (A) located under the longitudinal axis of the valve (1) and intended to come into contact with the bottom (14) of the rim (2), a reduction (10) of the lip (12), in the direction of its height according to the longitudinal axis of the valve, in such a way as to reduce its mass or its volume and to facilitate its application on said bottom (14) of the rim (2), when the mounting hole (7) of the valve (1) in the latter is too close, and not offering the bulb (4) a flat surface across its entire surface.

4. Valve according to claim 1, **characterized in that** the internal peripheral portion of the bulb (4) has, in its region (A) located under the longitudinal axis of the valve, intended to come into contact with the bottom (14) of the rim (2), a localized reduction (10) in its circumference, in such a way as to reduce its mass or its volume and to facilitate its application on said bottom (14) of the rim (2), when the mounting hole (7) of the valve (1) in the latter is too close, and not offering the bulb (4) a flat surface across its entire surface.

5. Valve according to one of claims 1 to 4, **characterized in that** it is associated with a pressure sensor housed in a box, the link between the valve and the case being carried out by the intermediary of the means of indexing constituted by at least one flat made on the nozzle of the valve, in correspondence with an additional flat made in a housing of the box, with the latter being positioned in relation to the rim, during mounting.

## Patentansprüche

1. Ventil (1) des Typs "Snap-in", dazu ausgelegt, direkt auf eine Felge (2) eines Fahrzeugrades montiert zu werden, das mit einem Reifen ohne Kammer, genannt "tubeless", ausgestattet ist, wobei das Ventil (1) fest mit einem Loch (7) der Felge (2) verbunden wird, das es axial über eine Auskehlung (3) durchquert, die an der Basis einer Wulst (4) des Ventils durchgeführt ist, wobei sich die Wulst (4) durch eine Kautschukumhüllung (5) eines inneren Rohransatzes des Ventils (1) verlängert, wobei die Auskehlung (3) elastisch mit dem Loch (7) der Felge (2) zusammenarbeitet, auf dessen Umfang sie sich anordnet, **dadurch gekennzeichnet, dass** entlang der Längsachse des Ventils (1) die Masse oder das Volumen der Wulst (4) im Bereich (A) der Wulst, der sich unter der Achse befindet, gerichtet auf die Felge (2), mit Bezug auf den Bereich (B) der Wulst, der sich unter dieser gleichen Achse befindet, reduziert ist, wobei diese Reduktion (9, 10) in der Nähe der Auskehlung (3) erfolgt, die dazu ausgelegt ist, mit dem Loch (7) der Felge (2) zusammenzuarbeiten, wobei das Ventil Mittel zur Indexierung umfasst, um seine Reduzierung (9, 10) auf die Unterseite (14) der Felge (2) auszurichten.

2. Ventil nach Anspruch 1, **dadurch gekennzeichnet, dass** der Teil der Wulst (4), der den Rohransatz (6) umgibt, in seinem Bereich (A), der sich unter seiner Längsachse befindet, ein koaxiales Sackloch (9) aufweist, das eine Reduktion darstellt, das sich entlang eines kreisförmigen Abschnittes erstreckt, so dass es seine Masse oder sein Volumen in diesem Bereich verringert und sie gleichzeitig im seinem Bereich (B), der diametral entgegen gesetzt ist, erhöht.

3. Ventil nach Anspruch 1, **dadurch gekennzeichnet, dass** der periphere innere Teil der Wulst (4) aus einem Kragen (11) besteht, der eine entsprechende Lippe (12) definiert, die eine teilweise ringförmige Auskehlung (13) begrenzt, die in ihrem Bereich (A), der sich unter der Längsachse des Ventils (1) befindet und ausgelegt ist, um mit dem Boden (14) der Felge (2) in Kontakt zu kommen, eine Reduktion (10) der Lippe (12) in der Richtung der Höhe gemäß der Längsachse des Ventils aufweist, um ihre Masse oder ihr Volumen zu reduzieren und ihre Anbringung auf den Boden (14) der Felge (2) zu erleichtern, wenn das Loch (7) zur Montage des Ventils (1) in dieser zu nahe ist und der Wulst (4) keine ebene Auflage auf seinem gesamten Umfang bietet.

4. Ventil nach Anspruch 1, **dadurch gekennzeichnet, dass** der periphere innere Teil der Wulst (4) in seinem Bereich (A), der sich unter der Längsachse des Ventils befindet, dazu ausgelegt, mit dem Boden (14) der Felge (2) in Kontakt zu kommen, eine Reduktion (10) aufweist, die sich auf seinem Umgang befindet, um seine Masse oder sein Volumen zu reduzieren und seine Anbringung auf den Boden (14) der Felge (2) zu erleichtern, wenn das Loch (7) zur Montage des Ventils (1) in dieser zu nahe ist und der Wulst (4) keine ebene Auflage auf seinem gesamten Umfang bietet.

5. Ventil nach einem der Ansprüche 1 bis 4, **dadurch gekennzeichnet, dass** es mit einem Drucksensor verbunden ist, der sich in einem Gehäuse befindet, wobei die Verbindung zwischen dem Ventil und dem Gehäuse durch Indexierungsmittel erfolgt, die aus mindestens einer Flachstelle bestehen, die auf dem Rohransatz des Ventils durchgeführt ist, in Verbindung mit einer zusätzlichen Flachstelle, die in einer Lagerung des Gehäuses durchgeführt ist, wobei letztere bei der Montage mit Bezug auf die Felge angeordnet wird.
